# EUROPEAN PATENT APPLICATION

(11) **EP 1 241 106 A2**
(43) Date of publication of application: **18.09.2002**
(21) Application number: 01126353.0
(22) Date of filing: 07.11.2001
(51) Int. Cl.: B65D 33/14

(54) **Dust bag with adhesive edge to be used when drilling walls**

(30) Priority: 12.03.2001 IT PD010020
(71) Applicant: TAKE-IN di Giacometti Andrea, 35020 Padova (IT)
(72) Inventor: Giacometti, Andrea, 35020 Padova (IT)
(74) Representative: Gustorf, Gerhard, Dipl.-Ing.

(57) **Abstract**

The invention is a dust bag to be applied to the wall before drilling holes. The bag (S) is provided with an adhesive strip (Sa) applied to the outer side of the straight or V-shaped edge of one of the bag sides. A graduated scale (Ss) on the inner side of the free edge of the side provided with adhesive strip facilitates drilling operations.

## Description

The present invention concerns the sector of wall drilling devices and in particular it concerns a new bag with adhesive edge for collecting the dust produced when drilling walls.

When a hole is drilled through a wall, the cement and/or bricks and/or plaster are reduced to powder that spreads in the air and falls on the furniture and on the floor.

Sometimes, in order to collect the dust, a wet sponge is positioned against the wall under the point where the hole is going to be drilled, but it is necessary to be helped by another person or to use one hand to hold the sponge, with the consequence that often the hole is not drilled correctly.

Sometimes a vacuum cleaner is used, but this has the same drawbacks just described for the sponge, and moreover there isn't always a vacuum cleaner available, which in any case must be carried to the point where the hole will be drilled, kept in the correct position and put back after use.

In order to eliminate all the drawbacks mentioned above, a dust bag has been designed and implemented, which can be applied to the wall just below the point where the hole will be drilled.

The main aim of the invention is the implementation of a bag suitable for collecting all the dust produced while drilling the wall and for preventing said dust from falling onto the floor.

Another aim of the invention is that it should be possible to position the new bag in the correct point, with no need to sustain it during the drilling operation.

Dust bag with at least one adhesive external edge, particularly suitable for collecting the dust produced when drilling walls.

The characteristics of the new bag will be highlighted in the following description of one among many possible applications of the invention in question, illustrated in the enclosed drawings, wherein:

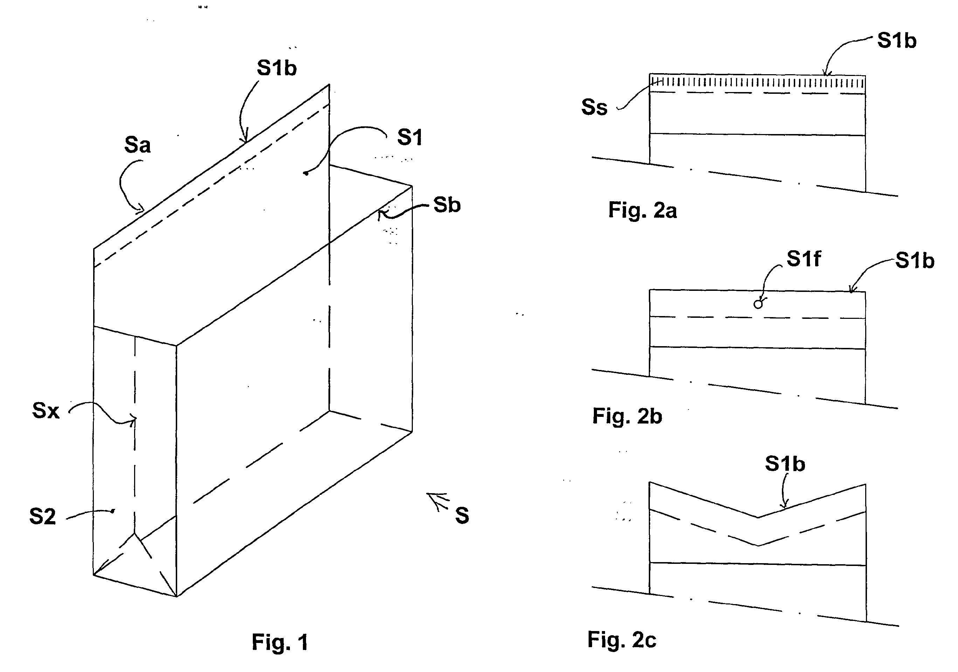

Figure 1 is an axonometric view of the new bag (S).

One of the long sides (S1) of the new bag (S) is higher with respect to the front edge and/or the other edges and in particular its longer part protrudes beyond the open edge (Sb) of the bag (S).

On the outer side of the free edge (S1b) of said long side (S1) there is an adhesive strip (Sa), preferably covered by a strip of protective paper.

On the short sides (S2) of the new bag (S) it is possible to make suitable folds (Sx), so that the bag can be comfortably folded before use.

The new bag (S) constituted as described above does not occupy space when it is not used and can be easily transported, for example in the drill case.

The use of the new bag (S) is very simple, immediate and practical.

It is sufficient to remove the protective paper from the adhesive strip (Sa) and to apply the open bag to the wall, so that the edge (S1b) of the long side (S1) is positioned immediately under the point where the hole must be drilled. The adhesive strip (Sa) will keep the bag (S) adherent to the wall, with its opening just below the point where the hole must be drilled.

When the wall is drilled, the resulting dust will fall into the new bag (S), without being dispersed and without falling on the floor.

Once the operation is finished, it is sufficient to detach the new bag (S) from the wall, close it and throw it away.

The new bag (S) allows the user to drill one or more holes through a wall with no need to use vacuum cleaners or sponges, with both hands free and with no need to ask the help of another person.

The free edge (S1b) of the long side (S1) may have different configurations, as represented in Figures 2a, 2b, 2c:
- it is possible to print a graduated scale (Ss) on the inner side of the free edge (S1b) of the long side (S1), in such a way as to facilitate the drilling of two adjacent holes or two holes at a fixed distance from given points of reference (Figure 2a);
- it is possible to provide the bag with a higher adhesive strip (Sa) and with a hole (S1f) in the long side (S1), in such a way as to allow the bag (S) to be applied exactly on the point where the hole must be drilled (Figure 2b);
- the free edge (S1b) of the long side (S1) may be V-shaped, in such a way as to protect from the spreading of dust even the area of the wall around the hole.

Therefore, with reference to the above description and to the enclosed drawings, the following claims are put forth.

## Claims

1. Dust bag **characterized in that** it comprises an adhesive strip applied on the outer side of the edge of one of its sides.

2. Dust bag according to claim 1, **characterized in that** the long side, provided with adhesive strip, is higher with respect to the open edge of the bag itself.

3. Dust bag according to claims 1 or 2, **characterized in that** it is provided with a graduated scale on the inner side of the free edge of the side provided with the adhesive strip.

4. Dust bag according to claims 1, 2, or 3, **characterized in that** it is provided with a hole near the free edge of the long side provided with adhesive strip, and wherein said adhesive strip extends also in the area around said hole.

5. Dust bag according to claims 1, 2, or 3, **characterized in that** the free edge of the long side provided with adhesive strip is V-shaped.
